# EUROPEAN PATENT SPECIFICATION

(11) **EP 2 154 595 B1**
(45) Date of publication and mention of the grant of the patent: **14.03.2018**
(21) Application number: 09275058.7
(22) Date of filing: 13.08.2009
(51) Int. Cl.: G05D 23/02, F24D 19/10, F16K 31/00

(54) **Compact control head for a thermostatic valve**
Kompakter Steuerkopf für ein thermostatisches Ventil
Tête de commande compacte pour vanne thermostatique

(30) Priority: 15.08.2008 GB 0814959
(43) Date of publication of application: 17.02.2010
(73) Proprietor: Pegler Limited, Doncaster, South Yorkshire DN4 8DF (GB)
(72) Inventor: Nortcliffe, Richard, Mexborough, South Yorkshire S64 8EH (GB); Wilson, Martin, Doncaster, South Yorkshire DN3 (GB)
(74) Representative: Wilson Gunn

(56) References cited:
- EP-A2- 1 176 488
- EP-A2- 1 359 489
- DE-A1- 3 340 802
- DE-U1-202007 007 492
- US-A- 4 089 461
- US-A- 4 171 768

## Description

The present invention relates to a compact control head for a thermostatic valve, particularly for a radiator valve.

Central heating systems typically comprise a boiler for heating water, and a plurality of water/air heat exchangers (normally, but misleadingly, called radiators: this convention will be used herein) and a system of pipes through which hot water is pumped from the boiler to the radiators and back again.

It is conventional for each radiator to have a water inlet and a water outlet passage, each passage being provided with a flow-control valve. One such valve is set by an installer to limit the maximum flow through the radiator, while the other is provided with a user control by means of which the flow of water through the radiator can be modified in order that its heat output can be controlled. In modern systems each radiator is provided with a valve which controls the flow of water through the radiator in response to changes in ambient temperature, the flow being increased as the temperature falls. Such valves (known as thermostatic valves) typically have a user control by means of which the temperature which the user desires to achieve can be controlled.

A thermostatic valve typically has two principal interconnected components: a flow valve and a control head. The flow valve has a body which is connected at the inlet or the outlet of a radiator. An operating pin projects from the body, and operates such that flow of water through the valve is restricted when the pin is urged into the body against a restoring spring force.

Within the control head, a sensing element is provided which undergoes axial linear expansion as its temperature increases. The sensing element is mounted within a housing in the head such that it is connected to the operating pin of the valve. In this manner expansion/contraction of the sensing element controls the opening of the valve. The housing is mounted within the head such that by rotation of an outer casing its axial position can be varied. This effectively varies the valve position for a given temperature and thus allows control of the temperature at which flow will be cut off. An example of such an arrangement is shown in US4089461.

Conventionally, the sensing element is connected to the operating pin via a compensation mechanism provided within the housing. The compensation mechanism is provided between the sensing element and the operating pin to ensure that expansion/contraction of the sensing element is transmitted to the operating pin and to guard against overloading. An example is that disclosed in EP0859303 wherein the compensation mechanism comprises a carrier in connection with an abutting pin of the sensing element on one side and a biasing spring on the other. The spring is provided within a spring retaining casing having a tube like form with a blind end provided distal from the sensing element, the blind end directly abutting or abutting, via a rod provided as part of the carrier mechanism, the operating pin. Expansion or contraction of the sensing element causes the position of the carrier to vary and thus causes the spring retaining casing to slide axially within the housing and/or causes the spring to compress or expand as necessary.

Such a compensation mechanism provides for safe and reliable operation of the valve in the event of excessive expansion by the element in relation to the temperature setting. Unfortunately, such an arrangement limits the minimum axial dimensions of the control head. This can be a problem if small control heads are desired either aesthetically or for reasons of limited space. Additionally, this limits the space within a control head of a given size for providing additional devices to add functionality. A further problem with such an arrangement is that it is difficult to provide a simple system for inferring the present valve position from the expansion of the sensing element.

It is therefore an object of the present invention to provide a control head which at least partially overcomes or alleviates the above problems. The invention is defined by claim 1. According to a first aspect of the present invention there is provided a control head for a flow valve, the control head comprising: a housing mounted within the head such that by rotation of the housing its axial position relative to a flow valve can be varied; a sensing element operable to expand or contract axially in response to temperature variations, the sensing element provided within the housing and having an abutting pin projecting axially of the housing to contact an operating pin of the flow valve; and a spring retained within the housing and biasing the sensing element towards the operating pin of the flow valve by engagement with the housing.

The direct abutment of the sensing element and the operating pin minimises the axial dimension of the control head.

The spring may be a helical spring. The spring may engage with an end portion of the housing and with a circumferential rim provided on the sensing element. In particular, the end portion of the housing may provide a rim or a plurality of rim sections for the spring to engage with. In normal operation, the spring may be held in compression between the circumferential rim of the sensing element and the end portion of the housing. In particular, part of the sensing element may be between the spring and the valve such that the spring acts to urge that part of the sensing element into abutment with the operating pin.

In a preferred embodiment, the spring may be a compound helical spring having a first portion with a first coil diameter and a second portion with a second larger coil diameter and a tapered section connecting the first and second sections. Such a spring may be provided such that the first portion is in engagement with said circumferential rim of the sensing element and the second portion is in engagement with said rim provided in the housing. If the dimensions of the second portion and the rim of the housing are suitably chosen, this allows the sensing element to project up to or through the end of the housing when the spring is under sufficient compression. This further minimises the axial dimensions of the control head.

The housing may comprise a limiting rim provided opposite the end portion. The limiting rim can define a limit to the axial movement of the sensing element.

The housing may be formed from an elastic material. The housing may be provided with one or more slits extending axially along the housing. This can facilitate the distortion of the shape of the housing. In particular, it may enable the housing to withstand the application of a force which causes the dimensions of end portion to be altered. The inner dimensions of the housing may be substantially the same as the outer dimensions of the spring. Alternatively, an inner dimension of the housing may be smaller than the outer dimensions of the spring so that, once fitted in the housing, the spring is retained.

The abutting pin may be connected to the main body of the sensing element via a pin guide. The pin may be attached to the pin guide by a pin attachment means. The pin attachment means may be by way of a barbed abutting pin cooperating with a bore in the pin guide.

The barbed abutting pin may comprise a plurality of barbs around its circumference. Alternatively, the barbed abutting pin may be provided with a single sprung barb. The abutting pin may further comprise a slit provided in the barbed end. This enables its barbed end to enter the bore of the pin guide.

The bore may be a stepped bore which cooperates with the barbed abutting pin. In such embodiments, the barbed abutting pin is preferably provided with two barbs and a slit.

Alternatively, the bore is a uniform bore. For such embodiments, the abutting pin may comprise a single sprung barb that provides sufficient interaction with the uniform bore so as to provide sufficient retention of the abutting pin. This has the advantage that it does not provide excess drag and hence it does not compromise the operation of the element. Additionally, the barbed abutting pin may be more easily removed from the bore.

In a particularly preferred embodiment the bore is a uniform bore and the abutting pin is provided with one or more sprung barbs which are operable to interact with the housing in order to provide for retention of the abutting pin. This is most advantageous as there is no addition drag caused by the retention system for the abutting pin and the arrangement of barbs provides for additional heat shielding. Preferably, the sprung barbs cooperate with a lip provided at the end of the housing which is distal from the end portion. The abutting pin may further comprise one or more radial retaining projections operable to cooperate with one of the slits in the housing. This can prevent the abutting pin from rotating about its axis and thus prevent the sprung barbs from disengaging from the lip on the housing. An additional advantage of such embodiments is that the radial retaining projections provide additional heat shielding. Alternatively, the housing may be provided with any other mechanism to prevent such disengagement, for example a lip being provided along the edges of the slits, as is convenient.

The pin may comprise a heat shield. The heat shield may act to thermally isolate the sensing element from the fluid flowing through the flow valve.

Further heat insulating material may be included in the assembly so as to improve the thermal isolation of the sensing element from the fluid flowing through the valve.

The end of the spring engaging with the housing may be provided with an inwardly projecting tag portion. Preferably, the tag portion is directed substantially radially inward. The tag portion may be connected to a control head temperature set point monitoring device via a suitable mechanical linkage. This enables the position of the linkage to be used indirectly to monitor the temperature set point of the control head.

The monitoring device may be a potentiometer. In particular, the mechanical linkage may comprise an arm connected both to the potentiometer and the tag portion. In the case of a rotary potentiometer the arm may be connected to a crank or cam projecting from the potentiometer. In the case of a linear potentiometer, the arm may be connected such that one end slides along the potentiometer. The potentiometer may be provided upon a circuit board located within the head. The circuit board may comprise one or more other components including a microprocessor and/or a transceiver. A battery or rechargeable battery may also be located within the head. Preferably the battery may be accessed via a removable portion of the head.

The control head may additionally or alternatively incorporate energy scavenging means for the purpose of charging the battery and/or powering said circuit board. Such energy scavenging means may include thermoelectric, photoelectric, piezoelectric or RF scavenging means as desired or as appropriate.

The head may be provided with an outer casing within which the housing is mounted. The outer casing may comprise a base and a cap. Preferably the base is mounted in a fixed relationship with the valve and the cap is able to rotate relative to the base. The housing may be mounted within the base and may be provided with an external thread corresponding to an internal thread provided on the interior of a bore in the base. As such, rotation of the housing can thus vary the axial position of the housing. Varying the axial position in this manner thus varies the position of the valve at a given temperature.

For embodiments in which the abutting pin comprises a heat shield, the heat shield may also provide additional retention for the abutting pin in the pin guide by cooperating with a step in the bore in the base. This may be particularly preferably for embodiments wherein the bore in the pin guide is a uniform bore.

The housing may be engaged with the cap such that rotation of the cap causes the housing and cap to co-rotate. This allows a user to control the operation of the valve with respect to temperature by rotating the cap. The housing may be provided with one or more outwardly projecting vanes enabling engagement with the cap.

The cap may be removable. In some embodiments one or more sections of the cap may be independently removed. This can allow a user or a maintenance employee to access components within the cap.

The head may be provided with locking means such that accidental rotation of the cap is limited, prevented or does not vary the axial position of the housing. The locking means may comprise one or more pins insertable into the thread and/or other co-operating features.

The flow valve may be a flow valve of the type having an operating pin projecting from the body of the valve against a biasing force, the flow through the valve being restricted when the operating pin is urged into the body of the valve.

A multiplicity of slits may be provided in the cap. Advantageously, further slits may be provided in the base and/or the housing. This allows a flow of air to reach the sensing element.

According to a second aspect of the present invention there is provided a flow valve incorporating a control head as hereinbefore described.

The flow valve may be a flow valve for regulating the supply of water to a radiator. The flow valve may be a flow valve of the type having an operating pin projecting from the body of the valve against a biasing force, the flow through the valve being restricted when the operating pin is urged into the body of the valve.

In order that the invention is more clearly understood, a number of embodiments will be described in detail, by way of example only, with reference to the accompanying drawings in which:
Figure 1a is a view of a control head for a thermostatic radiator valve according to the present invention;
Figure 1b is a view of a control head for a thermostatic radiator valve according to the prior art;
Figure 2 is a view of the housing and compensator mechanism of a control head for a thermostatic radiator valve according to the prior art;
Figure 3 is a view of the compensator mechanism of figure 2 in the absence of the housing;
Figure 4 is a view of the housing of a control head for a thermostatic radiator valve according to the present invention;
Figure 4A is a view of an alternative housing of a control head for a thermostatic radiator valve according to the present invention;
Figure 4B is a schematic diagram of the sensing element according to the present invention showing the connection to the abutting pin;
Figure 4C is a schematic diagram of the sensing element according to the present invention showing an alternative connection to the abutting pin;
Figure 4D is a schematic diagram of an entire control head for a thermostatic radiator valve head according to the present invention that shows the retention of the abutting pin by the cooperation of the heat shield and the step in the bore of the base part of the housing.
Figure 4E is a view of a further alternative housing of a control head for a thermostatic radiator valve according to the present invention.
Figure 4F is a section view of the further alternative housing according to the current invention shown in figure 4E, showing the connection of the abutting pin to the housing.
Figure 4G is a schematic diagram of an entire control head for a thermostatic radiator valve head according to the present invention that shows heat insulating material which is included in the assembly so as to improve the thermal isolation of the sensing element from the fluid flowing through the valve.
Figure 5 is view of the spring provided within the housing of figure 4;
Figure 6 is view of the spring and sensing element in the absence of the housing of figure 4;
Figure 7 is a view of an alternative embodiment of control head for a thermostatic radiator valve according to the present invention;
Figure 8 is a view of the control head for a thermostatic radiator valve of figure 7 with one potion of the cap removed;
Figure 9 is a view of the control head for a thermostatic radiator valve of figure 7 with the whole cap removed;
Figure 10 is an opposed view to figure 9 illustrating a first embodiment of a mechanical linkage between the spring and a monitoring device;
Figure 11 is an opposed view to figure 9 illustrating an alternative embodiment of a mechanical linkage between the spring and a monitoring device.

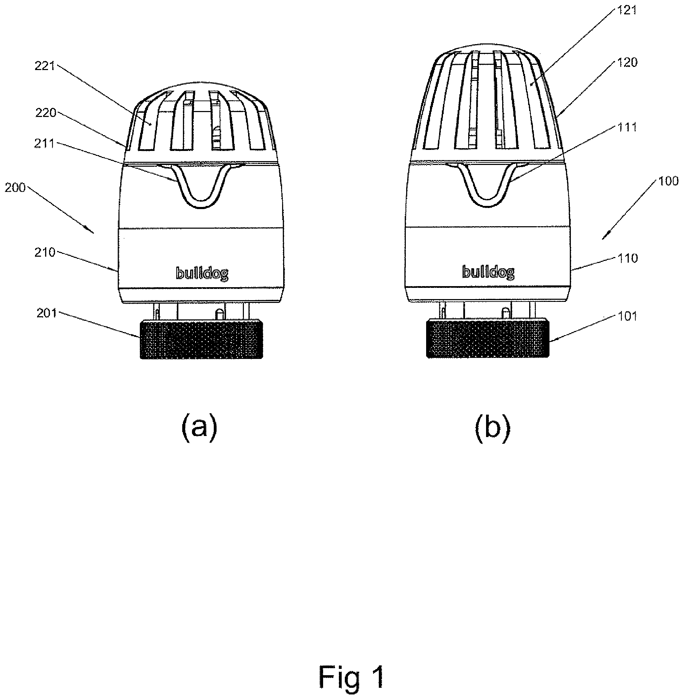

Referring initially to figures 1a and 1b showing respectively a control head according to the present invention 200 and a control head according to the prior art 100, a thermostatic valve has two principal interconnected components; a flow valve (not shown) and a control head 200, 100. The flow valve has a body which is connected at the inlet or the outlet of a radiator. An operating pin projects from the body, and operates such that flow of water through the valve is restricted when the pin is urged into the body against a restoring spring force. Within the control head 200, 100, a sensing element 240, 140 is provided which undergoes linear expansion as its temperature increases. The expansion acts mechanically to operate the pin, so restricting flow as temperature increases and correspondingly allowing greater flow when the sensing element 240, 140 contracts and the pin is urged further out of the body by the restoring spring force.

The control head 200, 100 for a flow valve comprises a fixed base 210, 110 and a rotatable cap 220, 120. Rotation of the cap 220, 120 causes corresponding co rotation of a housing 230, 130 within the base 210, 110. Rotation of the housing 230, 130 within the base 210, 110 varies the axial position of the housing 230, 130. The sensing element 240, 140 is mounted within the housing thus rotating the cap 220, 120 varies the axial position of the sensing element 240, 140.

The base 210, 110 is provided with a cutout 211, 111 through which a portion of the cap 220, 120 may be seen thus providing a user with an indication as to the cap 220, 120 rotation. The cap is provided with one or more slits 221, 121 allowing air to access the sensing element 240, 140. The base 210, 110 is secured to the valve via a ring fitting 201, 101.

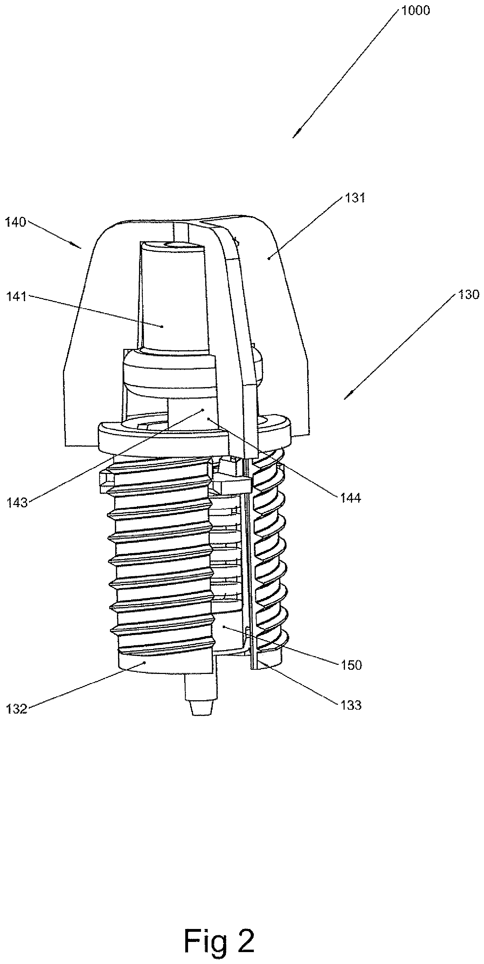

In figure 2, the housing 130 is shown in greater detail. The housing has a vaned upper portion 131 which retains the body 141 of the sensing element 140. The sensing element 140 shown is of a form common in the art and also comprises an abutting pin 144 located within a pin guide 143. The housing has a threaded lower section 132 for interacting with a corresponding thread in the base 110. Longitudinal slits 133 are provided in the lower section 132. A compensation mechanism 150 is provided linking the sensing element 140 with the operating pin of the valve. The combination of the housing 130, element 140 and compensation mechanism 150 may be called the control head engine 1000.

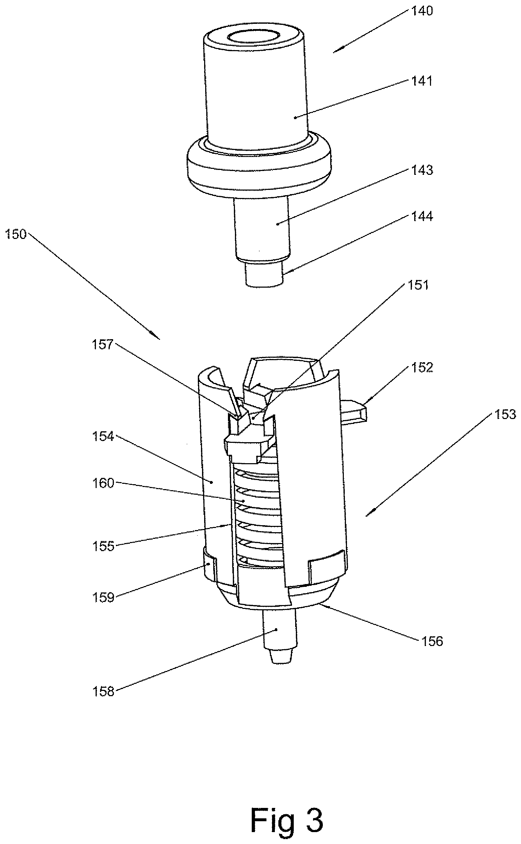

Turning to figure 3, the compensation mechanism 150 is shown in greater detail. This comprises a carrier 151 which in use is in connection with an abutting pin 144 of the sensing element 140. The carrier 151 has a plurality of radial projections 152 which lie within slits 155 in the body 154 of a spring retaining casing 153. The slits are provided with projections 157 for retaining the radial projections 152 within the slits 155. The spring retaining casing 153 is further provided with a blind end portion 156 and a projecting rod 158 for abutting the operating pin of the valve. The casing 153 is also provided with retaining projections 159 for securing it in particular orientation within the housing 130.

A spring 160 is located between the carrier 151 and the blind end 156. The spring urges the carrier 151 into abutment with the abutting pin of the sensing element 140. This ensures that contact is maintained with the sensing element 140 when it contracts axially, until the carrier 151 contacts the projections 157 of the body 154 of the spring retaining casing 153. The spring 160 can also be compressed when the sensing element 140 expands axially beyond the position where the valve is shut, thus preventing failure of the mechanism.

As the control head engine 1000 shown in figures 2 and 3 has a considerable axial dimension, this limits the minimum size of the control head 100. Accordingly, such control heads 100 may be larger than desired aesthetically or may be larger than is realistically required for installation at a particular location.

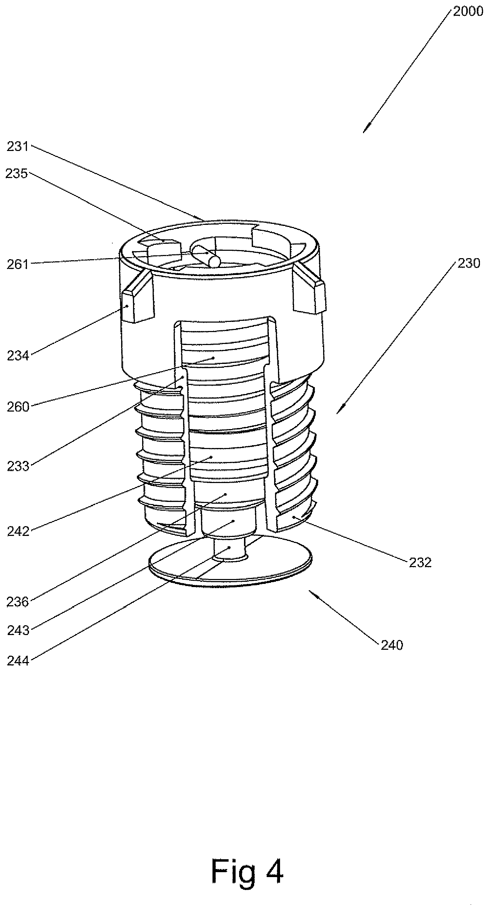

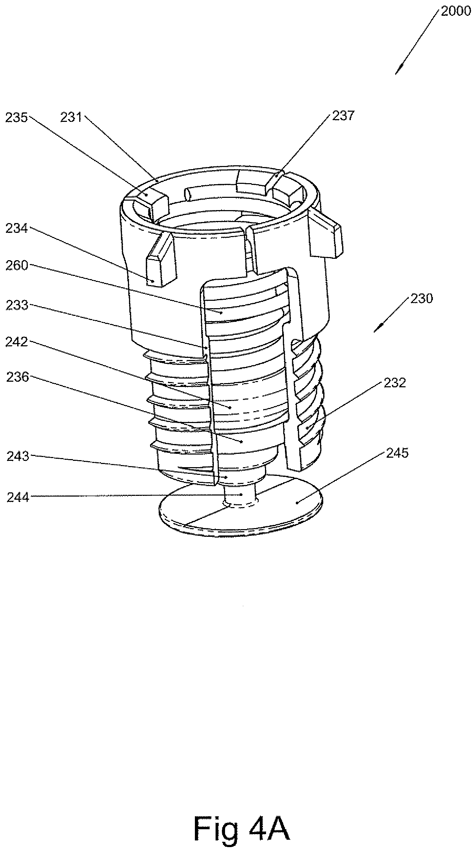

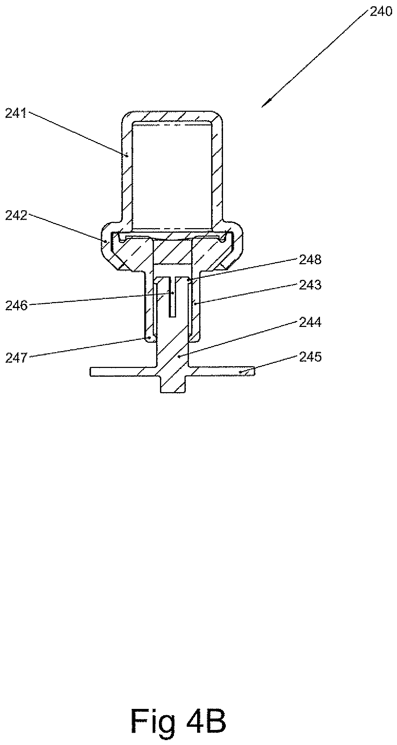

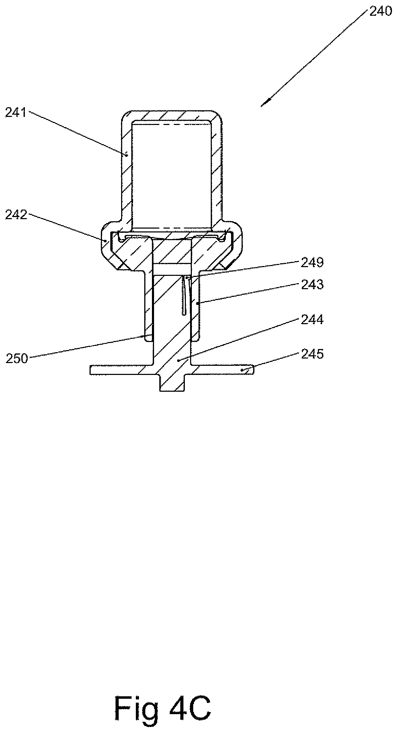

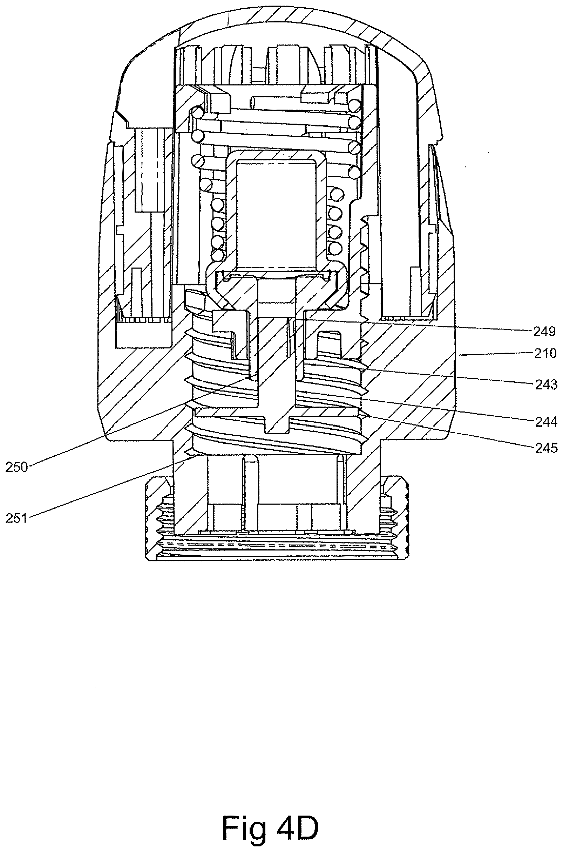

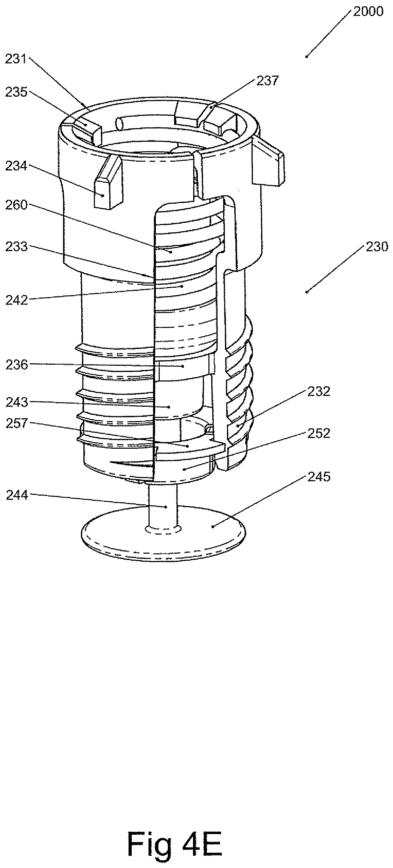

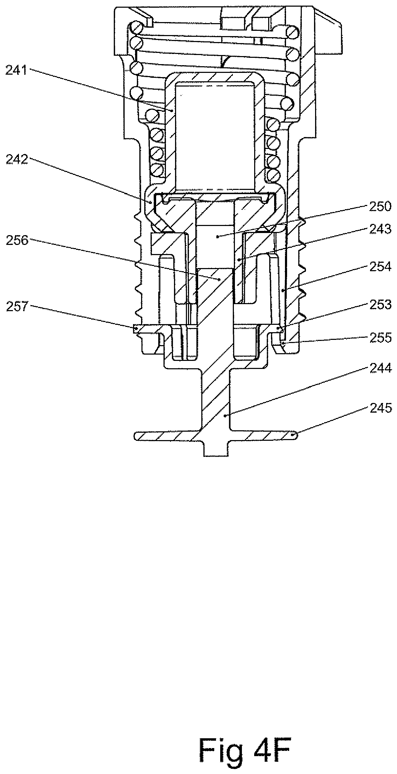

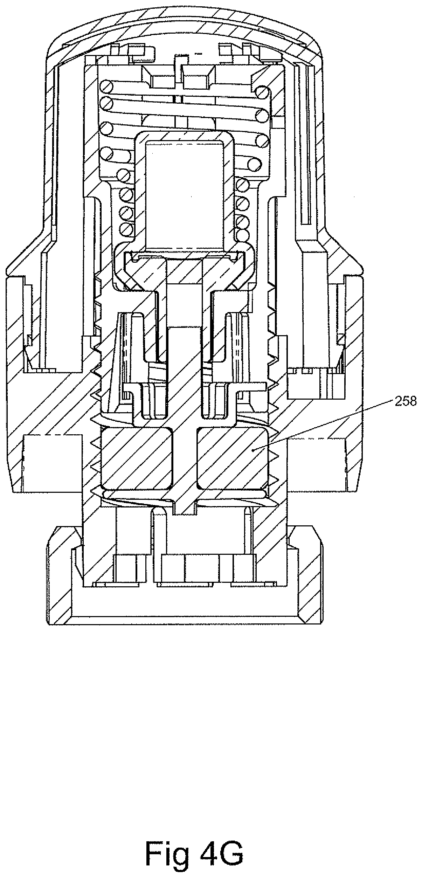

Turning to figures 4 to 6 an arrangement of a housing 230, sensing element 240 and spring 260 according to the present invention is shown. Such a combination, which may be referred to as the control head engine 2000, has a smaller axial dimension than a conventional arrangement of the control head engine 1000 incorporating a compensator mechanism. As such, it can be utilised in control heads 200 smaller than conventional control heads 100.

The housing 230 comprises a threaded tube portion 232 having a plurality of slots 233 and a limiting rim 236 at one end. The threaded portion interacts with a corresponding thread provided in the fixed base 210 and thus retains the housing 230 within the fixed base 210. The housing 230 also comprises an end portion 231 with a plurality of inwardly projecting rim sections 235 and a plurality of outwardly projecting vanes 234. The vanes 234 engage with the cap 220. In this manner rotation of the cap 220 causes rotation of the housing 230. Due to the threaded connection between the base 210 and the housing 230 such rotation causes the axial position of the housing 230 relative to the base 210 to be varied controllably.

An alternative arrangement of a housing 230, sensing element 240 and spring 260 according to the present invention is shown in figure 4A. The end portion 231 is pierced by a plurality of channels 237. The channels 237 are aligned with the slots 233 so that the housing 230 comprises a plurality of independent sections connected to the limiting ring 236, wherein each independent section comprises a fraction of the end portion 231 and a fraction of the threaded portion 232.

In this embodiment, the housing 230 is manufactured using a suitable elastic material. In order to install the sensing element 240 and the spring 260 within the housing 240, the independent sections, created by the presence of the channels 237, must be bent back. Once the sensing element 240 and the spring 260 are installed, the restoring forces within the independent sections causes the inwardly projecting rim sections 235 to move over the end of the spring 260 which retains the spring 260 and sensing element 240 within the housing 230.

A sensing element 240 is provided within the housing 230. The sensing element 240 shown is of a form common in the art and is of the same form as that shown in the prior art embodiment of figures 2 and 3. The sensing element 240 comprises a body portion 241, a circumferential rim 242, an abutting pin guide 243 and an abutting pin 244 located within pin guide 243. In preferred embodiments, the sensing element 240 further comprises a heat shield 245.

Once the abutting pin 144 of a sensing element 140 in a control head 100 according to the prior art is installed within the housing 130, it is in contact with the carrier 151 and is therefore constrained to the pin guide 143. However, the abutting pin 244 of the control head 200 according to the present invention is not in contact with any such part of the control head. In use, some element of constraint may be provided by abutting the pin of the valve. In the present invention, it is however preferred that the abutting pin 244 is more securely constrained within the pin guide 243. This is important since, typically, the control head 200 is distributed as a single part to be connected to a flow valve. It is therefore desirable that it remains integral before it has been installed rather than being allowed partially to disassemble.

One means by which the abutting pin 244 may be retained within the pin guide 243 is shown in figure 4B. In this embodiment, the abutting pin 244 comprises a barbed end 248 which is operable to engage with the stepped bore 247 of the pin guide 243. The abutting pin 244 is made of a suitable elastic material and further comprises a slot 246. In order to install the abutting pin 244 the barbed end can be flexed so that the slot becomes smaller and the barbed end can clear the stepped bore 247 of the pin guide. Once the abutting pin 244 is within the pin guide 243, the barbed end is released and the barbs prevent the abutting pin from falling out of the pin guide 243.

An alternative means by which the abutting pin 244 may be retained within the pin guide 243 is shown in figure 4C. In this embodiment, the abutting pin 244 comprises an end which incorporates a single sprung barb section 249 which is operable to interact with the uniform bore 250 of the guide 243. The interaction of the barb section 249 and the uniform bore 250 provides sufficient retention of the abutting pin 244 such that it will not fall out during the assembly process into the base 210. Once assembled into the base 210, the size of the heat shield 245 is such that it interacts with a step 251 in the bore of the base such that the abutting pin 244 is retained within the pin guide 243 as shown in figure 4D.

A further alternative means by which the abutting pin 244 may be retained within the pin guide 243 is shown in figures 4E, 4F and 4G. In this embodiment, the abutting pin 244 comprises a cup section 252 which incorporates a plurality of sprung barbs 253 and a plurality of radial locating projections 257.

The sprung barbs 253 are operable to interact with a plurality of slots 254 each of which are bounded by a lip 255 provided at the end of the housing 230. The sprung barbs 253 and the lip 255 are shaped so as to make accidental disengagement impossible once the sprung barbs 253 have passed over the lip 255 and entered the slots 254. This arrangement permits the guide 243 to have a uniform bore 250, as detailed in figure 4F, which cooperates with a uniform end 256 of the abutting pin 244. This is most advantageous as it minimises the drag caused by the abutting pin retention system.

The radial locating projections 257 are each operable to cooperate with one of the slits 233 in the housing 230. This prevents the abutting pin 244 from rotating about its axis and thus prevents the sprung barbs 253 from disengaging from the lip 255 on the housing 230. An additional advantage the present embodiment is that the radial locating projections 257 and sprung barbs 253 provide additional heat shielding.

As shown in figure 4G, further heat insulating material 258 may be included in the assembly to improve the thermal isolation of the sensing element form the fluid flowing through the valve.

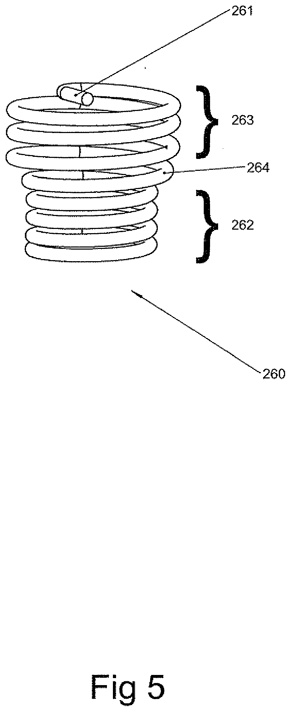

Also provided within the housing 230 is a spring 260. In the example shown in figure 5 the spring 260 is a particularly adapted helical spring. The spring 260 comprises of a form having a first section 262 of a first diameter, a second section 263 of a second larger diameter and a tapered intermediate section 264 therebetween. The spring is also optionally provided with an inwardly projecting tag portion 261.

In operation, the spring 260 is provided between the sensing element 240 and the end portion 231 of the housing 230. The spring 260 acts to urge the abutting pin 244 towards the operating pin of the valve. It can also provide protection against overloading. Providing the spring 260 behind and around the sensing element 240 can reduce the axial dimensions of a control head 200.

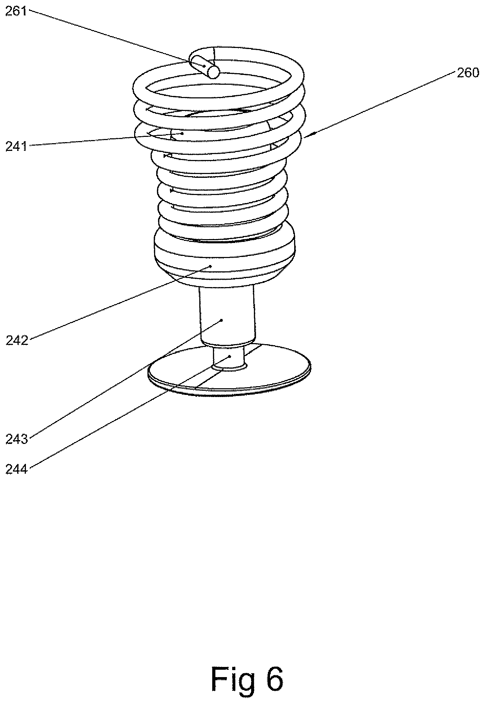

In the example shown in figure 4A, the first section 262 engages with the circumferential rim 242 and the second section 263 engages with the inwardly projecting rim sections 235. This allows the body portion 241 of the sensing element 240 and smaller diameter coils 262 to project between the inwardly projecting rim sections 235 and larger diameter coils 263 under maximum compression, further reducing the minimum axial dimensions of a control head 200, see figure 6 for greater clarity. It is possible for the housing to be adapted such that a conventional helical spring (with or without a tag 261) can be substituted for the adapted spring 260. Such an arrangement would not allow the body portion 241 of the sensing element 240 to project between the inwardly projecting rim sections 235. The limiting rim 236 is adapted to be engaged by the circumferential rim 242 and thus provide a means by which the range of movement of the sensing element 240 may be limited.

The tag end 261 provides a means by which the position of the spring 260 and hence the position of the housing 230 can be monitored. This enables the temperature set point of the control head to be inferred.

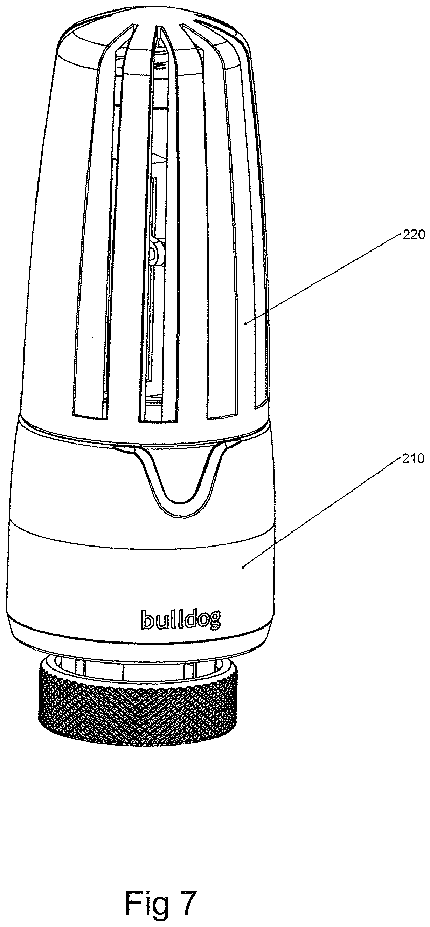

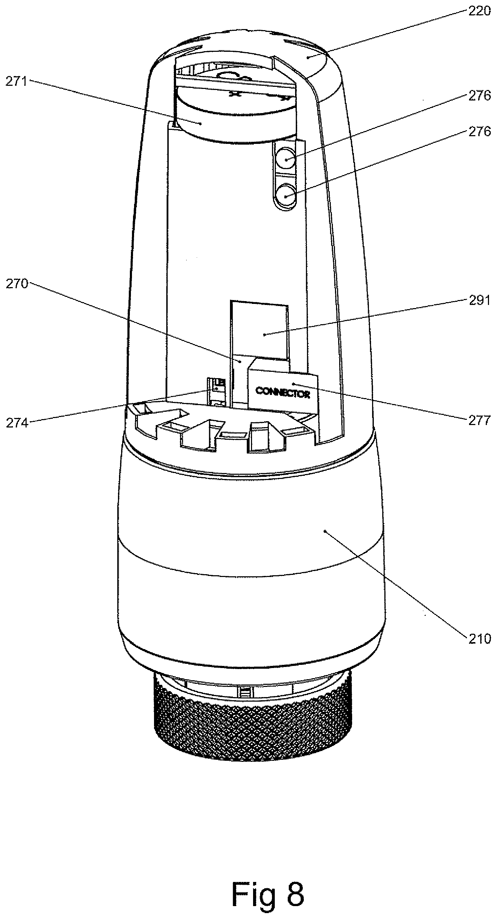

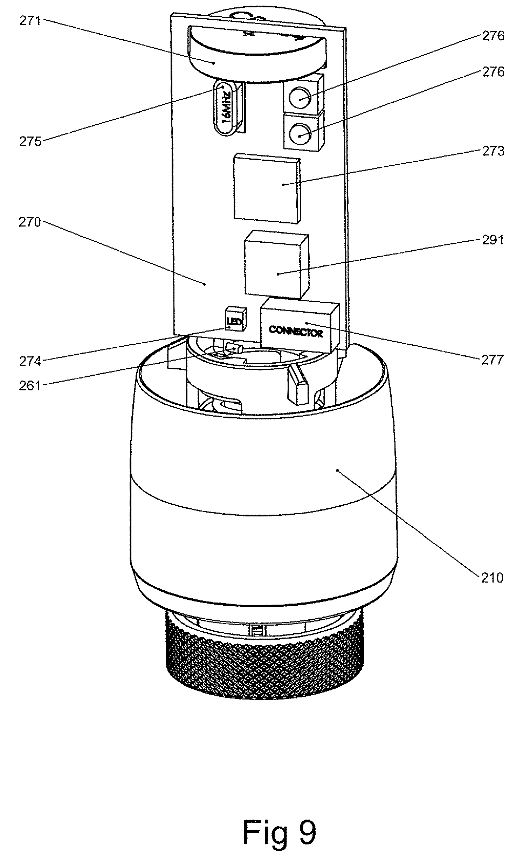

In an alternative to providing a more compact control head 200, the invention may use the space within the cap 210 to provide additional components. This possibility is illustrated by figures 7 to 11. In the particular example shown, monitoring and communication means are provided in the cap 220 and the cap is adapted to allow such means to be provided therein.

The monitoring and communication means comprises a circuit board 270 upon which a plurality of electronic components are provided. In the example shown these comprise a rechargeable or other type of battery 271, a combined microprocessor / transceiver 273, a connection socket 277, an LED 274 a high frequency oscillator 275 and a pair of user actuable controls 276. In different embodiments other combinations of components may be provided, including a thermistor. In use, the battery 271 may provide power for operation of the various components and may be accessed separately to the other components via a removable portion of the cap. The transceiver / processor 273 may control the operation of the components in response to signals received from the components. The transceiver / processor 273 may be operable to exchange data with external systems (including for example a heating system controller). The LED 274 may be illuminated to signify correct operation or a fault. The user actuable controls 276 may allow a user to vary the operational mode, reset the circuitry, perform a self test or the like. The controls 276 may be accessed by removing a portion of the cap 220. Other suitable components may be provided including energy scavenging means operable to recharge the battery 271.

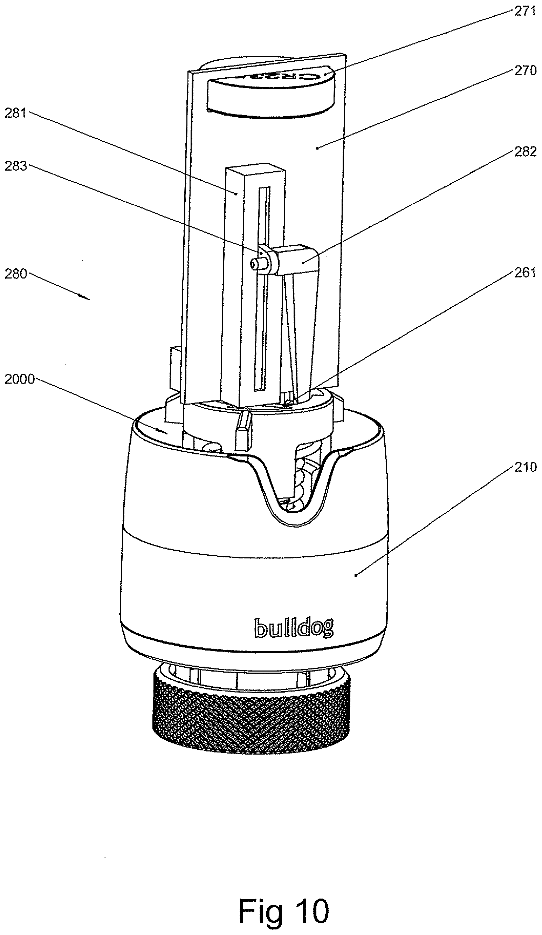

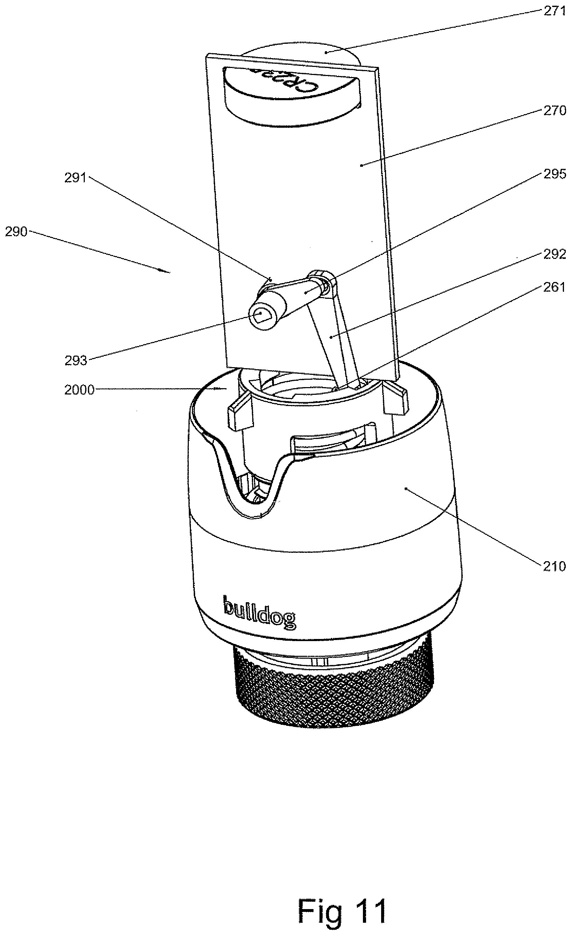

The valve position may be monitored by any suitable means. In the examples of figures 10 and 11 two suitable embodiments are shown. In figure 10, the monitoring means 280 comprises a linear potentiometer 281 having a slidable divider contact 283 connected to one end of an arm 282. The other end of the arm 282 is connected to the tag end 261 of spring 260. In use, movement of the position of the tag end 261 causes the slidable divider contact 282 to slide and thus vary the output of the potentiometer 281. This allows the position of the tag 261 and hence the temperature set point of the control head to be inferred.

In figure 11, the monitoring means 290 comprises a rotational potentiometer 291 having a rotatable divider contact 293 connected to via a crank 295 to the end of an arm 292. The other end of the arm 292 is connected to the tag end 261 of spring 260. In use, movement of the position of the tag end 261 causes the rotatable divider contact 293 to rotate and thus vary the output of the potentiometer 291. This allows the position of the tag 261 and hence the temperature set point of the control head to be inferred.

The control head 200 incorporating the monitoring and communication means may be used in a central heating system having a system controller operable to vary the operation of the system in response to signals received from one or more control heads 200. Due to the provision of a housing 230 of the present invention, such components can be readily fitted within control heads 200 of the same or similar size to conventional control heads 100.

It is of course to be understood that the invention is not intended to be limited to the details of the above embodiments which are described by way of example only.

## Claims

1. A control head (200) for a flow valve, the control head (200) comprising: a housing (230) provided with a threaded tube portion (232), the housing (230) mounted within a corresponding thread provided in the head (200) such that by rotation of the housing (230) the axial position of the housing (230) relative to a flow valve can be varied; a sensing element (240) operable to expand or contract axially in response to temperature variations, the sensing element (240) provided within the housing (230) and having an abutting pin (244) projecting axially of the housing (230) to contact an operating pin of the flow valve; and a spring (260) retained within the housing (230) and biasing the sensing element (240) towards the operating pin of the flow valve by engagement with the housing (230) wherein the sensing element (240) and the spring (260) are free to expand within the threaded tube portion (232) of the housing (230).

2. A control head (200) for a flow valve as claimed in any preceding claim wherein the spring (260) engages with a rim or a plurality of rim sections (235) provided on an end portion (231) of the housing (230) and with a circumferential rim (242) provided on the sensing element (240) and wherein the spring (260) is held in compression there between and the sensing element (240) is between the spring (260) and the valve such that the spring (260) acts to urge the sensing element (240) into abutment with the operating pin.

3. A control head (200) for a flow valve as claimed in claim 2 wherein the spring (260) is a compound helical spring having: a first portion (262) with a first coil diameter which is in engagement with said circumferential rim (242) of the sensing element (240); a second portion (263) with a second larger coil diameter which is in engagement with said rim (235) provided on the housing (230); and a tapered section (264) connecting the first and second sections.

4. A control head (200) for a flow valve as claimed in claim 3 wherein the dimensions of the second portion (263) and the rim (235) of the housing (230) are chosen, such that the sensing element (240) may project up to or through the end of the housing (230) when the spring (260) is under sufficient compression.

5. A control head (200) for a flow valve as claimed in any preceding claim wherein the housing (230) comprises a limiting rim (236) provided opposite the end portion (231) the limiting rim (236) defining a limit to the axial movement of the sensing element (240).

6. A control head (200) for a flow valve as claimed in any preceding claim wherein the housing (230) is provided with one or more slits (233) extending axially along the housing (230) and wherein an inner dimension of the housing (230) is smaller than the outer dimensions of the spring (260) so that, once fitted within the housing (230), the spring (260) is retained.

7. A control head (200) for a flow valve as claimed in any preceding claim wherein the abutting pin (244) is connected to the main body of the sensing element (240) via a pin guide (243), wherein the pin (244) is attached to the pin guide (243) by a pin attachment means.

8. A control head (200) for a flow valve as claimed in claim 7 wherein the pin attachment means is by way of a barbed abutting pin (248) cooperating with a bore (247) in the pin guide.

9. A control head (200) for a flow valve as claimed in claim 8 wherein the barbed abutting pin (248) comprises a plurality of barbs around its circumference and one or more slits (246) provided in the barbed end and wherein the bore (247) in the pin guide (243) is a stepped bore which cooperates with the barbed abutting pin (248).

10. A control head (200) for a flow valve as claimed in claim 8 wherein the barbed abutting pin (248) comprises a single sprung barb (249) and the bore (247) in the pin guide (243) is a uniform bore (247) wherein the single sprung barb (249) provides sufficient interaction with the uniform bore (247) so as to provide sufficient retention of the abutting pin (244).

11. A control head (200) for a flow valve as claimed in claim 8 wherein the pin attachment means is by way of one or more sprung barbs (253) provided on the abutting pin (244) which cooperate with a lip (255) provided at the end of the housing (230) which is opposite the end portion.

12. A control head (200) for a flow valve as claimed in claim 11 when dependent on claim 6 wherein the control head (200) is provided with a mechanism to prevent disengagement of the sprung barbs from the housing (230) wherein said mechanism comprises either: one or more radial locating projections (257) provided on the abutting pin, which are operable to cooperate with one of the slits (233) in the housing (230); or a lip provided along the edges of the or each slit (233).

13. A control head (200) for a flow valve as claimed in any preceding claim wherein the pin (244) comprises a heat shield and/or additional heat insulating material is provided between the sensing element and the valve.

14. A control head (200) for a flow valve as claimed in any preceding claim wherein the end of the spring (260) engaging with the housing is provided with a radially inwardly projecting tag portion (261) wherein the tag portion (261) is connected to a control head temperature set point monitoring device (280) via a mechanical linkage.

15. A control head (200) for a flow valve as claimed in claim 14 wherein the monitoring device (280) is a potentiometer (281) provided upon a circuit board (270), located within the head, which also comprises one or more other components including a microprocessor and/or a transceiver (271) and wherein the mechanical linkage comprises an arm (282) connected both to the potentiometer (281) and the tag portion (261), wherein either: the potentiometer (281) is a rotary potentiometer and the arm (282) is connected to a crank or cam projecting from the potentiometer (281); or the potentiometer (281) is a linear potentiometer and the arm (282) is connected such that one end slides along the potentiometer (281).

16. A control head (200) for a flow valve as claimed in any preceding claim wherein the control head further comprises: a battery or rechargeable battery (271), which is accessed via a removable portion of the head; and/or energy scavenging means which may include any one or all of include thermoelectric, photoelectric, piezoelectric or RF scavenging means.

17. A control head (200) for a flow valve as claimed in any preceding claim wherein the head is provided with an outer casing which comprises: a base (210) and a cap (220) within which the housing (230) is mounted, wherein: the base (210) is mounted in a fixed relationship with the valve and the cap (220) is able to rotate relative to the base (210); the housing (230) is mounted within the base and is provided with an external thread (232) corresponding to an internal thread provided on the interior of a bore in the base (210); and the housing (230) is engaged with the cap (220) such that rotation of the cap (220) causes the housing (230) and cap (220) to co-rotate.

18. A control head (200) for a flow valve as claimed in claim 17 wherein the cap (220) is removable or sections of the cap (220) are removable.

19. A control head (200) for a flow valve as claimed in claim 17 or claim 18 wherein the head (200) is provided with locking means such that accidental rotation of the cap (220) is limited, prevented or does not vary the axial position of the housing.

20. A control head (200) for a flow valve as claimed in claim 19 wherein the locking means comprise one or more pins insertable into the thread and/or other co-operating features.

21. A control head (200) for a flow valve as claimed in any one of claims 17 to 20 wherein a multiplicity of slits are provided in the cap (220) and/or the base (210) and/or the housing (230).

22. A flow valve incorporating a control head (200) as claimed in any preceding claim wherein the flow valve has an operating pin projecting from the body of the valve against a biasing force, the flow through the valve being restricted when the operating pin is urged into the body of the valve.

## Patentansprüche

1. Steuerkopf (200) für ein Durchflussventil, wobei der Steuerkopf (200) aufweist:
- ein Gehäuse (230), welches mit einem Gewindehülsenabschnitt (232) versehen ist, wobei das Gehäuse (230) innerhalb eines entsprechenden Gewindes, welches an dem Kopf (200) vorgesehen ist, derart gelagert ist, dass durch Drehung des Gehäuses (230) die Axialposition des Gehäuses (230) relativ zu einem Durchflussventil änderbar ist;
- einem Sensorelement (240), welches betreibbar ist, um sich in Reaktion auf Temperaturänderungen axial auszudehnen oder zusammenzuziehen, wobei das Sensorelement (240) in dem Gehäuse (230) angeordnet und mit einem Anschlagstift (244) versehen ist, welcher axial aus dem Gehäuse (230) vorsteht, um einen Betätigungsstift des Durchflussventils zu kontaktieren; und
- einer Feder (260), welche innerhalb des Gehäuses (230) aufgenommen ist und das Sensorelement (240) zu dem Betätigungsstift des Durchflussventils durch Beaufschlagung des Gehäuses (230) vorspannt, wobei das Sensorelement (240) und die Feder (260) frei sind, sich innerhalb des Gewindehülsenabschnitts (232) des Gehäuses (230) auszudehnen.

2. Steuerkopf (200) für ein Durchflussventil nach dem vorausgehenden Anspruch,
wobei die Feder (260) mit einem Kranz oder einer Vielzahl von Kranzabschnitten (235), welche an einem Endabschnitt (231) des Gehäuses (230) vorgesehen sind, und mit einem Umfangskranz (242) zusammenwirkt, welcher an dem Sensorelement (240) vorgesehen ist, und
wobei die Feder (260) dazwischen unter Kompression gehalten wird und das Sensorelemente derart zwischen der Feder (260) und dem Ventil ist, dass die Feder (260) bewirkt, das Sensorelement in Anschlag mit dem Betätigungsstift zu bringen.

3. Steuerkopf (200) für ein Durchflussventil nach Anspruch 2,
wobei die Feder (260) eine helixförmige Compoundfeder ist mit:
- einem ersten Abschnitt (262) mit einem ersten Wendeldurchmesser, welcher in Wirkverbindung mit dem Umfangskranz (242) des Sensorelementes (240) ist,
- einen zweiten Abschnitt (263) mit einem zweiten größeren Wendeldurchmesser, welcher in Wirkverbindung mit dem Kranz (235) ist, welcher an dem Gehäuse (230) vorgesehen ist, und
- einem sich verjüngenden Abschnitt (264), welcher den ersten Abschnitt und den zweiten Abschnitt verbindet.

4. Steuerkopf (200) für ein Durchflussventil nach Anspruch 3,
wobei die Abmessungen des zweiten Abschnitts (263) und der Kranz (235) des Gehäuses (230) so gewählt sind, dass das Sensorelement (240) bis zum oder durch das Ende des Gehäuses (230) vorstehen kann, wenn die Feder (260) unter ausreichender Kompression steht.

5. Steuerkopf (200) für ein Durchflussventil nach einem der vorhergehenden Ansprüche,
wobei das Gehäuse (230) einen Begrenzungskranz (236) aufweist, welcher an dem entgegengesetzten Endabschnitt (231) vorgesehen ist, wobei der Begrenzungskranz (236) eine Begrenzung der Axialbewegung des Sensorelementes (240) definiert.

6. Steuerkopf (200) für ein Durchflussventil nach einem der vorhergehenden Ansprüche,
wobei das Gehäuse (230) mit einem oder mehr Schlitzen (233) versehen ist, welche sich axial entlang des Gehäuses (230) erstrecken, und
wobei eine innere Abmessung des Gehäuses (230) kleiner ist als die Außenabmessungen der Feder (260), so dass die Feder (260) zurückgehalten ist, sobald diese in das Gehäuse (230) eingesetzt ist.

7. Steuerkopf (200) für ein Durchflussventil nach einem der vorhergehenden Ansprüche,
wobei der Anschlagstift (244) mit dem Grundkörper des Sensorelements (240) über eine Stiftführung (243) verbunden ist, wobei der Stift (244) an der Stiftführung (243) mittels einer Stiftbefestigungseinrichtung befestigt ist.

8. Steuerkopf (200) für ein Durchflussventil nach Anspruch 7,
wobei die Stiftbefestigungseinrichtung über einen mit Widerhaken versehenen Anschlagstift (248) mit einer Bohrung (247) in der Stiftführung zusammenwirkt.

9. Steuerkopf (200) für ein Durchflussventil nach Anspruch 8,
wobei der mit Widerhaken versehene Anschlagstift (248) eine Vielzahl von Widerhaken entlang seines Umfangs und einen oder mehrere Schlitze (246) aufweist, welche in dem mit Widerhaken versehenen Ende vorgesehen sind, und wobei die Bohrung (247) in der Stiftführung (243) eine abgesetzte Bohrung ist, welche mit dem mit Widerhaken versehenen Anschlagstift (248) zusammenwirkt.

10. Steuerkopf (200) für ein Durchflussventil nach Anspruch 8,
wobei der mit Widerhaken versehene Anschlagstift (248) einen einzelnen Federwiderhaken (249) aufweist, und die Bohrung (247) in der Stiftführung (243) eine einheitliche Bohrung (247) ist, wobei der einzelne Federwiderhaken (249) für ein ausreichendes Zusammenwirken mit der einheitlichen Bohrung (247) ausgebildet ist, so dass eine ausreichende Rückhaltung des Anschlagstiftes (244) gegeben ist.

11. Steuerkopf (200) für ein Durchflussventil nach Anspruch 8,
wobei die Stiftbefestigungseinrichtung durch einen oder mehrere Widerhaken (253) an dem Anschlagstift (244) ausgebildet ist, welcher mit einer Lippe (255) zusammenwirkt, welche an dem Ende des Gehäuses (230) vorgesehen ist, welche dem Endabschnitt gegenüberliegt.

12. Steuerkopf (200) für ein Durchflussventil nach Anspruch 11, wenn dieser von Anspruch 6 abhängt,
wobei der Steuerkopf (200) mit einer Einrichtung zum Verhindern eines Lösens der Federwiderhaken von dem Gehäuse (230) vorgesehen ist, wobei die Einrichtung aufweist: Entweder eine oder mehrere radial angeordnete Vorsprünge (257), welche an dem Anschlagstift vorgesehen sind und welche betätigbar sind, um mit den Schlitzen (233) im Gehäuse (230) zusammenzuwirken; oder eine Lippe, welche entlang den Kanten von jedem Schlitz (233) angeordnet ist.

13. Steuerkopf (200) für ein Durchflussventil nach einem der vorhergehenden Ansprüche,
wobei der Stift (244) ein Hitzeschild und/oder ein zusätzliches hitzeisolierendes Material aufweist, welches zwischen dem Sensorelement und dem Ventil vorgesehen ist.

14. Steuerkopf (200) für ein Durchflussventil nach einem der vorhergehenden Ansprüche,
wobei das Ende der Feder (260), welche das Gehäuse beaufschlagt, mit einem radial nach innen vorspringenden Steckabschnitt (261) versehen ist, wobei der Steckabschnitt (261) über eine mechanische Verbindung mit einer Steuerkopf-Temperatureinstellpunkt-Überwachungsvorrichtung (280) verbunden ist.

15. Steuerkopf (200) für ein Durchflussventil nach Anspruch 14,
wobei die Überwachungsvorrichtung (280) ein Potentiometer (281) ist, welches auf der Schaltkreisplatine (217) vorgesehen ist, welche innerhalb des Kopfes angeordnet ist und welcher weiterhin einen oder mehrere andere Komponenten, umfassend einen Mikroprozessor und/oder eine Sende-Empfangs-Einheit (271), aufweist, und wobei die mechanische Verbindung einen Arm (282) umfasst, welcher sowohl mit dem Potentiometer (281) als auch mit dem Steckabschnitt (261) verbunden ist, wobei: Entweder das Potentiometer (281) ein Drehpotentiometer und der Arm (282) mit einem Hebel oder einer Nocke verbunden ist, welche von dem Potentiometer (281) vorsteht; oder das Potentiometer (281) ein lineares Potentiometer ist und der Arm (282) derart verbunden ist, dass ein Ende entlang des Potentiometers (281) gleitet.

16. Steuerkopf (200) für ein Durchflussventil nach einem der vorhergehenden Ansprüche,
wobei der Steuerkopf weiterhin aufweist:
eine Batterie oder eine wiederaufladbare Batterie (271), zu welcher über einen entfernbaren Bereich des Kopfes Zugang besteht, und/oder
eine Energiegewinnungseinrichtung, welche mindestens eine oder alle folgenden Einrichtungen aufweist: eine thermoelektrische, eine fotoelektrische, eine piezoelektrische oder eine Hochfrequenz-Energiegewinnungseinrichtung.

17. Steuerkopf (200) für ein Durchflussventil nach einem der vorhergehenden Ansprüche,
wobei der Kopf mit einem Außengehäuse versehen ist, welches aufweist: eine Basis (210) und eine Kappe (220), in welchem das Gehäuse (230) angeordnet ist, wobei die Basis (210) fest in Bezug auf das Ventil gelagert ist und die Kappe (220) ausgebildet ist, sich relativ zur Basis (210) zu drehen;
das Gehäuse (230) innerhalb der Basis angeordnet und mit einem äußeren Gewinde (232) versehen ist, welches mit einem Innengewinde korrespondiert, welches im Innern einer Bohrung in der Basis (210) vorgesehen ist; und
das Gehäuse (230) mit der Kappe (220) derart beaufschlagt ist, dass eine Drehung der Kappe (220) das Gehäuse (230) veranlasst, mit der Kappe (220) gemeinsam zu drehen.

18. Steuerkopf (200) für ein Durchflussventil nach Anspruch 17,
wobei die Kappe (220) entfernbar ist oder Abschnitte der Kappe (220) entfernbar sind.

19. Steuerkopf (200) für ein Durchflussventil nach Anspruch 17 oder 18,
wobei der Kopf (200) mit einer Verriegelungseinrichtung versehen ist, so dass ein zufälliges Drehen der Kappe (220) begrenzt oder verhindert ist oder keine Veränderung der axialen Position des Gehäuses bewirkt.

20. Steuerkopf (200) für ein Durchflussventil nach Anspruch 17,
wobei die Verriegelungseinrichtung einen oder mehrere in das Gewinde eingreifbare Stifte und/oder andere zusammenwirkende Elemente aufweist.

21. Steuerkopf (200) für ein Durchflussventil nach einem der Ansprüche 17 bis 20, wobei eine Vielzahl von Schlitzen in der Kappe (220) und/oder der Basis (210) und/oder dem Gehäuse (230) vorgesehen sind.

22. Durchflussventil, welches einen Steuerkopf (200) nach einem der vorhergehenden Ansprüche aufweist,
wobei das Durchflussventil einen Betätigungsstift hat, welcher von dem Grundkörper des Ventils entgegen einer Vorspannkraft vorsteht, wobei der Durchfluss durch das Ventil eingeschränkt wird, wenn der Betätigungsstift in den Grundkörper des Ventils gedrückt wird.

## Revendications

1. Tête (200) de commande d'une vanne de débit, la tête (200) de commande comprenant : un boîtier (230) pourvu d'une partie (232) tubulaire filetée, le boîtier (230) étant monté dans un filetage correspondant prévu dans la tête (200), de manière à pouvoir, en faisant tourner le boîtier (230), modifier la position axiale du boîtier (230) par rapport à une vanne de débit, un élément (240) de détection propre à se dilater ou à se contracter axialement en réaction à des variations de température, l'élément (240) de détection étant prévu dans le boîtier (230) et ayant une broche (244) de butée faisant saillie axialement du boîtier (230) pour venir en contact avec une broche de fonctionnement de la vanne de débit et un ressort (260) retenu dans le boîtier (230) et repoussant l'élément (240) de détection vers la broche de fonctionnement de la soupape de débit par enclenchement avec le boîtier (230), l'élément (240) de détection et le ressort (260) étant libres de se dilater dans la partie (232) tubulaire filetée du boîtier (230) .

2. Tête (200) de commande d'une vanne de débit telle que revendiquée à l'une quelconque des revendications précédentes, dans laquelle le ressort (260) s'enclenche avec un bord ou une pluralité de tronçons (235) de bord prévus sur une partie (231) d'extrémité du boîtier (230) et avec un bord (242) circonférentiel prévu sur l'élément (240) de détection et dans laquelle le ressort (260) est maintenu en compression entre eux et l'élément (240) de détection est entre le ressort (260) et la vanne, de manière à ce que le ressort (260) tende à mettre l'élément (240) de détection en butée sur la broche de fonctionnement.

3. Tête (200) de commande d'une vanne de débit telle que revendiquée à la revendication 2, dans laquelle le ressort (260) est un ressort hélicoïdal composite ayant une première partie (262) d'un premier diamètre de spire, qui est en enclenchement avec le bord (242) circonférentiel de l'élément (240) de détection, une deuxième partie (263) d'un deuxième diamètre de spire plus grand, qui est en enclenchement avec le bord (235) prévu sur le boîtier (230) et une partie (264) conique reliant les première et deuxième parties.

4. Tête (200) de commande d'une vanne de débit telle que revendiquée à la revendication 3, dans laquelle les dimensions de la deuxième partie (263) et du bord (235) du boîtier (230) sont choisies de manière à ce que l'élément (240) de détection puisse faire saillie jusqu'à l'extrémité ou dans l'extrémité du boîtier (230) lorsque le ressort (260) est comprimé suffisamment.

5. Tête (200) de commande d'une vanne de débit telle que revendiquée à l'une quelconque des revendications précédentes, dans laquelle le boîtier (230) comprend un bord (236) de limitation prévu à l'opposé de la partie (231) d'extrémité, le bord (236) de limitation définissant une limite au déplacement axial de l'élément (240) de détection.

6. Tête (200) de commande d'une vanne de débit telle que revendiquée à l'une quelconque des revendications précédentes, dans laquelle le boîtier (230) est pourvu d'une fente (233) ou de plusieurs fentes (233) s'étendant axialement le long du boîtier (230) et dans laquelle une dimension intérieure du boîtier (230) est plus petite que les dimensions extérieures du ressort (260), de manière à retenir le ressort (260) une fois adapté dans le boîtier (230) .

7. Tête (200) de commande d'une vanne de débit telle que revendiquée à l'une quelconque des revendications précédentes, dans laquelle la broche (244) de butée est reliée au corps principal de l'élément (240) de détection, par l'intermédiaire d'un guidage (243) de broche, la broche (244) étant adjointe au guidage (243) de broche par des moyens d'adjonction d'une broche.

8. Tête (200) de commande d'une vanne de débit telle que revendiquée à la revendication 7, dans laquelle les moyens d'adjonction d'une broche le font à l'aide d'une broche (248) de butée à pointe coopérant avec un alésage (247) du guidage de broche.

9. Tête (200) de commande d'une vanne de débit telle que revendiquée à la revendication 8, dans laquelle la broche (248) de butée à pointe comprend une pluralité de pointes autour de sa circonférence et une fente (246) ou plusieurs fentes (246) prévues dans l'extrémité à pointe et dans laquelle l'alésage (247) du guidage (243) de broche est un alésage à palier, qui coopère avec la broche (248) de butée à pointe.

10. Tête (200) de commande d'une vanne de débit telle que revendiquée à la revendication 8, dans laquelle la broche (248) de butée à pointe comprend une unique pointe (249) sur ressort et l'alésage (247) du guidage (243) de broche est un alésage (247) uniforme, l'unique pointe (249) sur ressort procurant une interaction suffisante avec l'alésage (247) uniforme pour procurer une retenue suffisante de la broche (244) de butée.

11. Tête (200) de commande d'une vanne de débit telle que revendiquée à la revendication 8, dans laquelle les moyens d'adjonction de broche s'effectuent à l'aide d'une pointe (253) ou de plusieurs pointes (253) sur ressort prévues sur la broche (244) de butée, qui coopèrent avec une lèvre (255) prévue à l'extrémité du boîtier (230), qui est opposée à la partie d'extrémité.

12. Tête (200) de commande d'une vanne de débit telle que revendiquée à la revendication 11 lorsqu'elle dépend de la revendication 6, dans laquelle la tête (200) de commande est pourvue d'un mécanisme pour empêcher les pointes sur ressort de se désenclencher du boîtier (230), le mécanisme comprenant soit une ou plusieurs saillies (257) de localisation radiales prévues sur la broche de butée, qui peuvent fonctionner pour coopérer avec l'une des fentes (233) du boîtier (230), soit une lèvre prévue le long des bords de chaque fente (233).

13. Tête (200) de commande d'une vanne de débit telle que revendiquée à l'une quelconque des revendications précédentes, dans laquelle la broche (244) comprend un bouclier thermique et/ou du matériau supplémentaire isolant thermiquement est prévu entre l'élément de détection et la vanne.

14. Tête (200) de commande d'une vanne de débit telle que revendiquée à l'une quelconque des revendications précédentes, dans laquelle l'extrémité du ressort (260), s'enclenchant avec le boîtier, est pourvue d'une partie (261) de bout faisant saillie vers l'intérieur radialement, la partie (261) de bout étant reliée à un dispositif (280) de contrôle du point de réglage de la température de la tête de commande par l'intermédiaire d'une liaison mécanique.

15. Tête (200) de commande d'une vanne de débit telle que revendiquée à la revendication 14, dans laquelle le dispositif (280) de contrôle est un potentiomètre (281) prévu sur une plaquette (270) à circuit imprimé placée dans la tête, qui comprend également un autre composant ou plusieurs autres composants, y compris un microprocesseur et/ou un émetteur récepteur (271), et dans laquelle la liaison mécanique comprend un bras (282) relié à la fois au potentiomètre (281) et à la partie (261) de bout, dans laquelle soit le potentiomètre (281) est un potentiomètre tournant et le bras (282) est relié à une manivelle ou à une came faisant saillie du potentiomètre (281), soit le potentiomètre (281) est un potentiomètre linéaire et le bras (282) est relié de manière à ce qu'une extrémité glisse sur le potentiomètre (281).

16. Tête (200) de commande d'une vanne de débit telle que revendiquée à l'une quelconque des revendications précédentes, dans laquelle la tête de commande comprend en outre : une pile ou un accumulateur (271), auquel on accède par une partie amovible de la tête et/ou des moyens de récupération d'énergie, qui peuvent comprendre l'un quelconque ou tous de moyens de récupération thermoélectriques, photoélectriques, piézoélectriques ou RF.

17. Tête (200) de commande d'une vanne de débit telle que revendiquée à l'une quelconque des revendications précédentes, dans laquelle la tête est pourvue d'une enveloppe extérieure, qui comprend une embase (210) et une coiffe (220), dans laquelle le boîtier (230) est monté, dans laquelle l'embase (210) est montée suivant une relation fixe avec la vanne et la coiffe (220) peut tourner par rapport à l'embase (210), le boîtier (230) est monté dans l'embase et est pourvu d'un filetage (232) extérieur correspondant à un taraudage prévu à l'intérieur d'un alésage de l'embase (210) et le boîtier (230) est enclenché avec la coiffe (220), de manière à ce que la rotation de la coiffe (220) fasse tourner ensemble le boîtier (230) et la coiffe (220).

18. Tête (200) de commande d'une vanne de débit telle que revendiquée à la revendication 17, dans laquelle la coiffe (220) est amovible ou des parties de la coiffe (220) sont amovibles.

19. Tête (200) de commande d'une vanne de débit telle que revendiquée à la revendication 17 ou la revendication 18, dans laquelle la tête (200) est pourvue de moyens de verrouillage de manière à ce qu'une rotation accidentelle de la coiffe (220) soit limitée, empêchée ou ne modifie pas la position axiale du boîtier.

20. Tête (200) de commande d'une vanne de débit telle que revendiquée à la revendication 19, dans laquelle les moyens de verrouillage comprennent une broche ou plusieurs broches pouvant être insérées dans le filetage et/ou dans d'autres caractéristiques de coopération.

21. Tête (200) de commande d'une vanne de débit telle que revendiquée à l'une quelconque des revendications 17 à 20, dans laquelle une multiplicité de fentes sont prévues dans la coiffe (220) et/ou dans l'embase (210) et/ou dans le boîtier (230).

22. Vanne de débit incorporant une tête (200) de commande telle que revendiquée dans l'une quelconque des revendications précédentes, dans laquelle la vanne de débit a une broche de fonctionnement faisant saillie du corps de la vanne à l'encontre d'une force de sollicitation, le débit dans la vanne étant restreint lorsque la broche de fonctionnement est repoussée dans le corps de la vanne.
